# EUROPEAN PATENT SPECIFICATION

(11) **EP 0 315 603 B1**
(45) Date of publication and mention of the grant of the patent: **29.12.1993**
(21) Application number: 88830465.6
(22) Date of filing: 31.10.1988
(51) Int. Cl.: A01D 34/73

(54) **Line trimmer**
Fadentrimmer
Appareil de coupe à filament

(30) Priority: 04.11.1987 IT 953187; 30.03.1988 IT 1158988 U
(43) Date of publication of application: 10.05.1989
(73) Proprietor: Calcinai, Maria Rosa, Montanino-Fraz.Com.Reggello Firenze (IT)
(72) Inventor: Calcinai, Maria Rosa, Montanino-Fraz.Com.Reggello Firenze (IT)
(74) Representative: Mannucci, Gianfranco, Dott.-Ing.

(56) References cited:
- EP-A- 0 168 254
- EP-A- 0 203 011
- EP-A- 0 249 585
- US-A- 4 020 552
- US-A- 4 035 912
- US-A- 4 097 991
- US-A- 4 107 901
- US-A- 4 156 967

## Description

The invention concerns an appliance for scrub clearance, grass cutting and the like, with multiple lines as cutting elements, comprising a housing casing including top and bottom parts, means for safely coupling laid top and bottom parts together, said parts forming a chamber in which are housed at least one spool on which said lines are wound and means to increase the length of said lines in terms of the type of vegetation to be cut or to restore said lines to their previous length following operational wear.

In appliances of this kind, regulating and/or restoring the length of the cutting lines is often a long and tedious operation. In some types of known appliances, in fact, the casing in which the spools with the line are housed has to be unscrewed and partially opened, each line lengthened by the action of pulling on its free end, and the casing closed again. Apart from the obvious disadvantage of having to partially open the casing housing the spools of line, the lengths of cutting line obtained in this way are never completely uniform.

Appliances are also known, for example from US-A-4,107,901, which are provided with a rather complex device for automatic paying out of the cutting line, comprising a solenoid and a driving mechanism which puts a spool of cutting line into rotation in order to unwind a predetermined length of line.

Appliances also exist which have inside them multiple spools of cutting line, four for example, each of which is attached to resilient locking devices. To lengthen each of the lines an unlocking device is operated (usually a push-button), serving the line in question, and this causes release of the resilient locking devices and enables the link to be unwound through the action of pulling on its free end. In appliances of this type, as many lengthening operations require to be performed as there are cutting lines. Moreover, in this case also, the different lines are not lengthened to the same uniform length. And furthermore, if multiple spools of cutting line are provided that are positioned off-center in relation to the axis of rotation of the casing, and if the amount of line wound on the different spools is not uniform, the appliance will be dynamically unbalanced and may start to vibrate when operated.

Grass-cutting, scrub-clearance and similar appliances are usually coupled at the end of a shaft handle to a hub that generally rotates on an axis at an obtuse angle to the axis of the shaft. The hub is generally designed with a series of stepped circles enabling the positioning of the appliance to be rotated; screw-type devices are used for affixture, which can be in the form of a threaded pin on the hub in conjunction with a fastening nut on the appliance, or of a threaded hole for taking a bolt. In any case, the method of affixture employed calls for space in the center of the appliance for the nut-and-bolt type fastening devices. US-A-4,097,991 and US-A-4,020,552 disclose an appliance of this type. They place a limit on the types of appliance that can be affixed to a shaft handle of the aforementioned type. Scrub-clearance, grass-cutting and similar appliances also present problems in regard to the provision of affixture openings in the center of the appliance.

EP-A-0 203 011 describes a grass cutting appliance with top and bottom parts, coupled together by means of elastic projections and which together form a chamber for housing the cutting line spool. A third element is provided for controlling paying out of the cutting lines by pressing the appliance on the ground. The top part of the casing is coupled to a rotary hub by means of a nut which is engaged onto a threaded portion of the rotating hub. Demounting of the cutting appliance from the hub is possible only by previously detaching the bottom part of the casing from the top part thereof, i.e. by completely opening the casing. This known appliance can be used only with a special kind of rotary hub and vice-versa.

EP-A-0 168 254 (Fig. 9) discloses a line trimmer of the kind defined in the preamble of claim 1. This known device comprises a housing casing comprised of three parts, namely a top, a bottom and an intermediate part. The spool is housed between the bottom and the intermediate part, while the means for increasing the length of the cutting lines are housed between the intermediate and the top part of the casing. The casing is directly connected by means of a threaded hole in the axial shaft thereof to the rotary hub.

The subject of the invention is an appliance of the type described above which does not present the aforesaid disadvantages with respect to their coupling to the shaft handle and which imposes no limitations on the type of grass-cutting, scrub-clearance or similar appliance that can be affixed to a hub affixed to a shaft handle of the type described above. Additionally, it is an object of the invention to provide an appliance wherein it is a very simple operation to engage in and release it from the hub of the drive shaft. It is a further object of an improved embodiment of the invention, to provide an appliance that enables the cutting lines to be unwound with ease and dispatch, with the lines being unwound to a uniform length.

For coupling up an appliance for grass-cutting, scrub-clearance and the like, as described above, to the rotary hub generally coupled to the end of a shaft handle, a substantially bowl-shaped intermediate component is provided for engagement between the top part of the casing of the appliance and the rotary hub. This intermediate component is adapted to be coupled with the rotary hub; peripherally arranged quick-release coupling devices are provided between said intermediate component and the casing, to ensure that the casing is firmly supported by and is rotated with the intermediate component, but can at the same time easily be decoupled from the shaft handle.

The bowl-shaped intermediate component may be fitted with coupling slots and the appliance with resilient attachments engaging in said slots; quick-release coupling may be effected with the use of engaging pieces, release being obtained by means of pressure on the resilient attachments.

The intermediate bowl-shaped component can have an aperture for fitting onto a stepped pickup provided - in the usual manner - on the rotary hub, the intermediate component being firmly affixed opposite this pickup by screw devices to the hub. A reducing ring can be used to function between the aperture in the bowl-shaped intermediate component and the stepped pickup, if the latter has a reduced dimension.

The appliance can also have profiles cooperating in the intermediate component and the casing of the appliance for starting up rotation of the appliance.

In an improved embodiment, the appliance according to the invention comprises: devices for coupling and decoupling said two parts; resilient devices designed to maintain said coupling devices in the hold position; and, of one piece with one of said two parts, devices for effecting connection between said part and said spool, whilst the other one of said parts exhibits outlet bushes for the ends of the lines.

In effect, said resilient devices urge said parts towards each other in the axial direction, the distancing of said two parts in relation to each other in the axial direction causing the disengagement of said coupling and uncoupling devices. With this system it is possible for one of the two parts of the head to be held steady whilst the other is moved away in the axial direction, the parts being thus disengaged, and for the line to be thereupon unwound from the spool or spools by rotation of the two parts in relation to each other. In this way the operation of regulating the length of line is made simple and rapid. When the spool, or one of the spools, is empty it can be speedily replaced through disengagement of the two parts forming the head.

In one possible embodiment, one of said parts comprises a tubular wall forming a grooved profile for coupling on the spool or spools of line, the spool or spools of line being set firmly in said tubular wall in that it/they has/have a corresponding grooved profile for engagement in said tubular wall; said part is also equipped with a series of pins in a frontal coupling device designed to engage in matching holes in the other of the said parts forming the casing housing the spool or spools. Said resilient devices can also be housed in the tubular wall, as can devices for coupling together the two parts forming the casing of the appliance. Said coupling devices are in this way all housed in the head, and constitute no obstruction between the head and the surface (the ground for example) to be worked over.

The drawings illustrate one, non-limiting, embodiment of the invention. In these drawings:
Fig 1 represents an overall external view of the appliance coupled to the end of a shaft;
Fig. 2 represents a partial sectional view of the intermediate component and the components operating in conjunction with same;
Fig. 3 represents a partial exploded view;
Figs. 4 and 5 illustrate a grass cutting appliance using a line, fitted with coupling devices corresponding with sections IV-IV and V-V in Fig. 3;

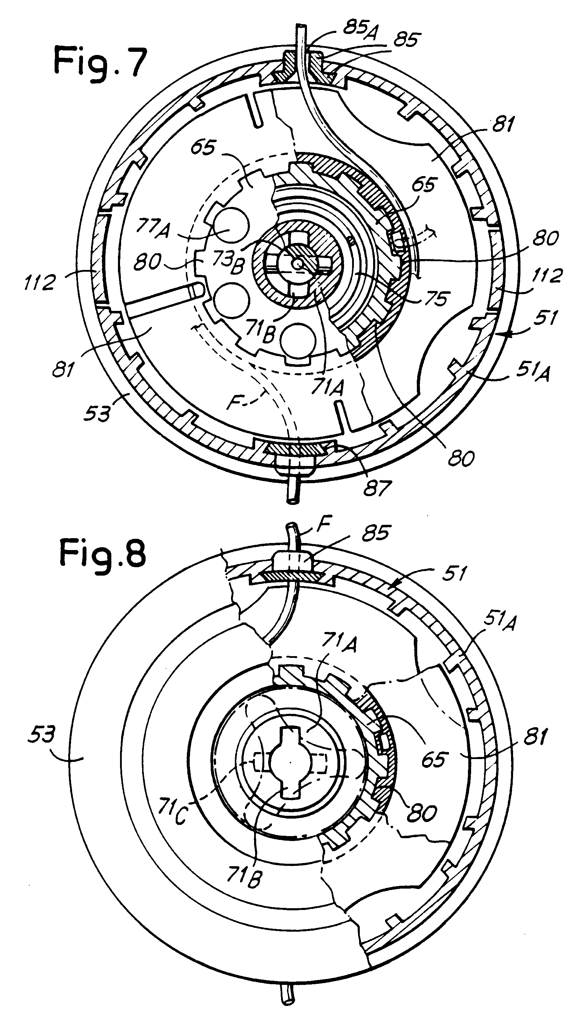

Figs. 6, 7 and 8 represent sectional views corres - ponding with sections VI-VI, VII-VII and VIII-VIII in Fig. 4;

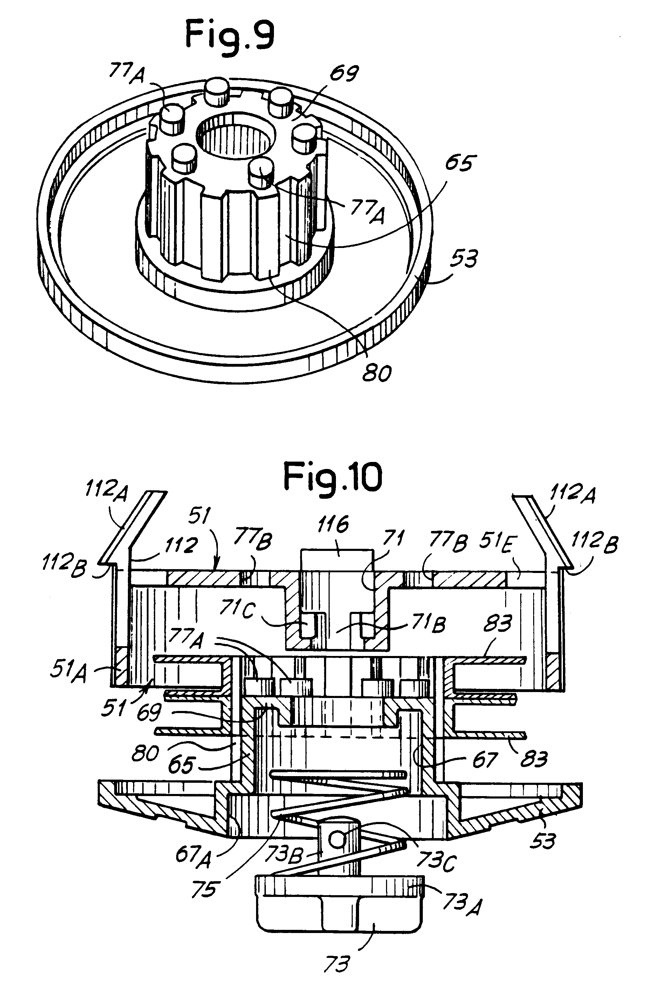

Fig. 9 shows one of the casing parts in perspective;
Fig. 10 illustrates the grass cutter shown in sectional view in Fig. 4 with the component parts all disassembled.

As shown by the drawings, the appliance comprises a casing formed of two parts 51 and 53 coupled together in such a manner that they can slide in the axial direction and also rotate.

The part 53 forms, with a cylindrical wall 65, a seating 67 that is coaxial with the head, closed at the inner end by an end wall 69 with a hole in the center for the sliding insertion of a corresponding cylindrical wall 71 belonging to part 51, forming a housing seating for a bayonet joint. The seating 67 houses a plug component 73 and a compression spring 75 reacting between the end wall 69 and a flange 73A of the plug 73. To create the bayonet joint, the plug 73 forms a shaft 73B with two opposed radial pins 73C whilst a thickening 71A in the cylindrical wall 71 forms an axial guide seating for the shaft 73B with two grooves 71B for the pins 73C and two seats 71C in which the pins 73C are housed following rotation of the plug 73 through 90° after the pins 73C have slid through the grooves 71B. When the plug 73 is engaged in the seatings 71C of the wall 71 formed by the part 51, the two parts 51 and 53 are urged by the spring 75 towards each other and maintained in the closed position when the plug 73 is engaged in a bayonet joint in the manner described above. It is to be noted that the plug 73 is fully recessed in the seating 67 of the part 53, and can be manipulated by virtue of an enlargement 67A of said seating 67.

The parts 51 and 53 form a front teeth coupling, with, in the example shown, pins 77A coming out of the end wall 69 and holes 77B in the part 51. In this way, when the plug 73 is engaged in a bayonet joint in the wall 71, the two parts 51, 53 must be parted in the axial direction - overcoming the force of the spring 75 - for the two parts 51, 53 to be released and rotated in relation to each other.

The cylindrical wall 65 exhibits on the outside a grooved profile 80 coupling with a corresponding grooved profile on a spool 81 or a pair of spools 81, 83 whereon the cutting lines F are wound. Two lines F can be wound on the spool or on each spool; the inside ends of the lines F are held fast in seatings in the spools, whilst the outside ends of the lines F protrude from the casing formed by the two parts 51, 53 through apertures 85 A in bushes 85 housed in corresponding seatings 87 on the shell 51A of the part 51 of the head. To unwind the lines F, and so lengthen them, all that is required is to grip the two parts 51, 53 and move them apart from each other in the axial direction against the force of the spring 75 so as to disengage the pin coupling 77A, 77B; thereupon, keeping the two parts 51, 53 apart, it is possible to rotate them in relation to each other and hence, by reason of the grooved profile coupling between the part 53 and the spools 81, 83, cause the latter to rotate in relation to the part 51 housing the bushes 85, thus causing the lines F to unwind from the spools through the apertures 85A.

Using the method described, it is possible to unwind in a single operation an equal length of line with respect to all the lines F in use. It is not necessary to pull out the line F manually through the apertures in the bushes 85. In effect, once the line F has been slackened following rotation of the two parts 51, 53 in relation to each other, the subsequent action of rotating the casing 51, 53 causes the slackened lines F to protrude by the action of centrifugal force.

The bushes 85, with apertures 85A to allow the lines F to pass through, are elongated in shape and are housed in the corresponding elongated seatings 87 on the shell 51A of the part 51 of the head. In this manner, even if the seating housing the bushes 85 becomes worn, and there is some play between seating and bush, the latter will not come away from its respective seating when the two parts 51, 53 are moved apart for the line to be unwound, but will merely slide within the seating, reverting to its original position when the two parts 51, 53 are recoupled together. In this way, loss of any of the bushes is avoided, as is the possibility of the dangerous consequences that could result if a bush 85 were to come away from its seating 87, since the bush could then be projected outwards by centrifugal force with start-up of rotation.

For changing the spools 81, 83 or any others, it suffices to free the plug 73 by pressing it against the action of the spring 75 so as to disengage the pins 73C from the seatings 71C, then turn it and withdraw it in such a manner that the pins 73C slide in the grooves 71B, thus causing the two parts 51, 53 to move apart from each other, and finally recouple them by carrying out the same operations in reverse.

A differing number of spools can also be set into the grooved profile 80 of the cylindrical wall 65, a single, taller spool, for example, or two or three separate spools. Spools can also be used with a single line winding or with windings comprising more than two lines, four lines, for example.

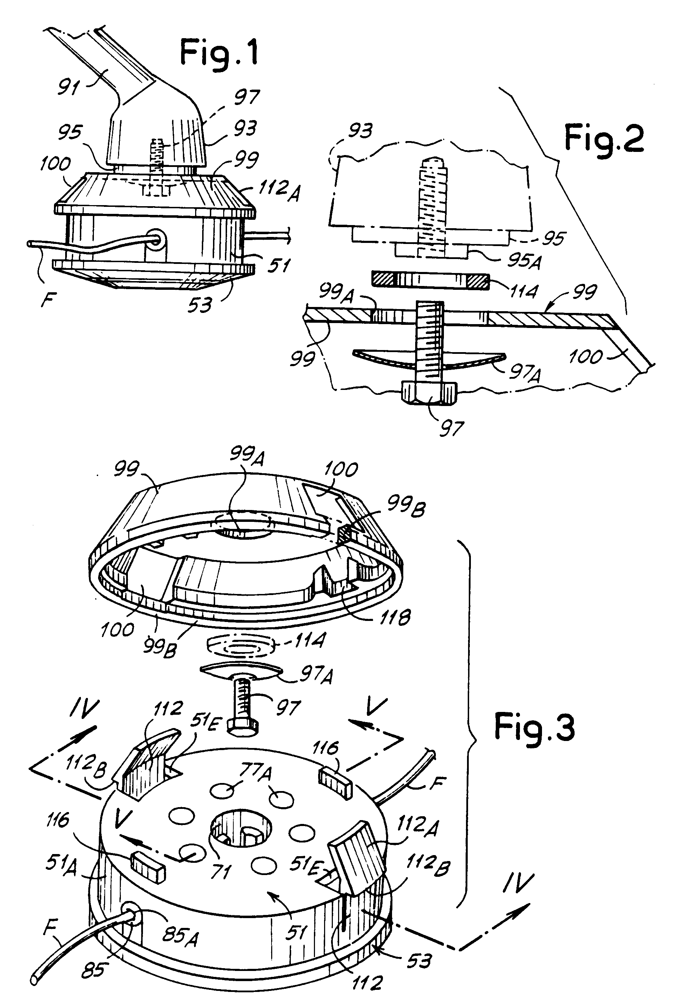

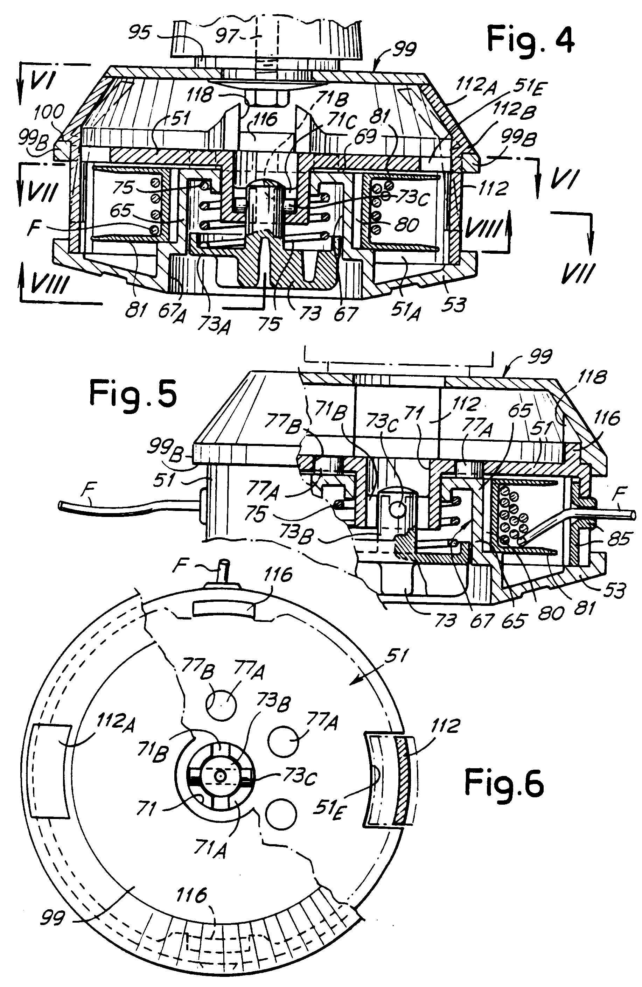

The numeral 91 in Figs. 1, 2 and 4 illustrates in summary form the shaft handle housing inside a drive shaft extending by means of an articulated joint to the head 93 of the shaft handle; from the head 93 there protrudes a hub 95 which is caused to rotate by the motor carried by the shaft handle 91, on an axis that is inclined in relation to that of the shaft handle. In particular, the hub 95 is in the form of a stepped circular component 95A serving to center and position the appliance to be affixed, which must for this purpose exhibit an aperture whose circular dimensions are no smaller than those of the cylindrical wall of the stepped component 95A. The method of affixture is through a screw device, represented in the drawings by a bolt 97 for affixture in an axially positioned threaded hole in the hub 95, to couple to said hub an intermediate component 99 with an aperture for fitting over the stepped component 95A. In other possible embodiments, the hub has a threaded pin for coupling up the same wall with the aperture, by means of a nut.

The grass-cutting, scrub-clearance or similar appliance is housed inside the two parts 51, 53 described above. The appliance needs to be affixed to the hub 95, to which it is coupled through the interpositioning of the said intermediate component 99, designed in the shape of a bowl. In particular, this intermediate component 99 displays a hole 99A in the center whose diameter corresponds with that of the cylindrical wall of the stepped component 95A or is greater than the diameter of said wall, in which case recourse must be had to a reducing element. The intermediate component 99 also has a rim 99B that can be employed as a support for the casing of the appliance. In all cases the intermediate component 99 has slots 100 positioned laterally in a uniform arrangement round the axis of the component 99, which can for example comprise two opposed slots 100 in the sloping wall of the bowl-shaped intermediate component 99.

In correspondence with the slots 100, resilient attachments 112 are provided extending from the shell 51A of the part 51 of the appliance, comprising engaging pieces 112A and retaining edges 112B; corresponding with said attachments 112 are slots 51E in the part 51, to enable the attachments 112 to be resiliently displaced by flexure. The resilient attachments 112 are designed to be snap-inserted in the slots 100 through the sliding motion of the engaging pieces 112A forming part of said resilient attachments. Catch retention is effected between the retaining edges 112B and the rims 100A of the slots 100 closest to the edge 99B.

The bowl-shaped intermediate component 99 is affixed by means of the screw devices 97 already indicated (or other means) to the stepped component 95A, the thickness of the said intermediate component 99 in the area of the hole 99A being not less than the height of the stepped component 95A. If the diameter of the cylindrical wall of the stepped circular component 95A is smaller than that of the hole 99A, reducing ring elements 114 can be employed (Fig. 2) whose external diameter corresponds with that of the hole 99A and whose internal diameter corresponds with that of the cylindrical wall of the stepped component 95A, with one or other of the rings being used in conjunction with the intermediate component 99 on the stepped component 95A; as a rule, one ring alone 114 is sufficient to compensate for the one difference in diameter that is to be found between two standardized diameters of the types of hub used for the coupling of the shafts that are the most widely sold.

The bowl-shaped intermediate component 99 is affixed to the hub 95 of the shaft handle 91 by being screwed on with the use of screw devices 97, with the interposition of a resilient shrinkage plate 97A. The appliance to be affixed and operated is coupled to the bowl-shaped component 99 by its own resilient attachments 112 with the aid of the engaging pieces 112A on said resilient attachments, which slide over the edge 99B and hence inside the component 99 till they mesh in with the teeth 112B on the rims 100A of the slots. To release the appliance, all that is needed is to press down radially on the pieces 112A belonging to the resilient attachments 112, projecting in alignment with the slots 100, to cause the teeth 112B to be released from the rims 100A. It is advantageous, for this operation, for the attachments 112 and the slots 100 to be in number of two and diametrically opposed.

For starting rotation of the appliance, direct use can be made of the attachments 112, but suitable pieces for axial engagement can be provided for purposes of start-up, on attachments coming from the casing 51, 53 of the appliance, like those indicated by the numeral 116 in the drawings, to operate in conjunction with correspondingly shaped elements 118 inside the bowl-shaped intermediate component 99. Coupling arrangements for start-up involve the axial positioning of the casing 51, 53 of the appliance by means of the resilient attachments 112 for engagement in the slots 100, possibly also with the use of guide and connecting pieces for angular positioning of the said resilient attachments 112 in correspondence with the slots 100 and/or of guides for positioning the attachments 116 with respect to the profiles 118.

With this coupling system, the appliance - to be affixed - requires to have the resilient attachments 112, which are on the periphery, and possibly the attachments for engagement and start-up indicated by 116, but no other space-consuming coupling elements are necessary, especially in the central, that is to say, axial area of the appliance; accordingly, various different types of appliance can be coupled to the shaft with the interposition of the component 99.

## Claims

1. Appliance for scrub clearance, grass cutting or the like, with multiple lines as cutting elements, comprising a housing casing including top and bottom parts, means for safely coupling said top and bottom parts (51, 53) together, said parts forming a chamber in which are housed at least one spool on which said lines are wound and means to increase the length of said lines in terms of the type of vegetation to be cut or to restore said lines to their previous length following operational wear, said appliance being adapted to be coupled to a rotary hub (95) fitted at the end of a shaft handle (91), characterized in that the appliance comprises a substantially bowl-shaped intermediary component (99) for engagement between the top part (51) of the casing (51, 53) and the rotary hub (95) and adapted to be engaged with the rotary hub (95), and peripherally arranged quick-release coupling devices (100, 112) between said intermediary component (99) and the casing (51, 53), to ensure that the casing is firmly supported by and rotated with the intermediate component (99), and can be quickly released from said shaft handle (91).

2. Appliance in accordance with claim 1, characterized in that the bowl-shaped intermediary component (99) is fitted with coupling slots (100) and the appliance with resilient attachments (112) engaging in said slots; quick-release coupling being effected with the use of engaging pieces (112A), and release being obtained by means of pressure on the resilient attachments (112).

3. Appliance in accordance with claim 1, characterized in that the bowl-shaped intermediary component (99) has an aperture (99A) for fitting onto a stepped pickup (95A) provided - in the usual manner - on the rotary hub (95), the intermediate component (99) being firmly affixed opposite this pickup (95A) by screw devices (97) to the hub (95).

4. Appliance in accordance with claim 3, characterized in that a reducing ring (114) is provided to function between the aperture (99A) in the bowl-shaped intermediary component (99) and the stepped pickup (95A), if the latter has a reduced dimension.

5. Appliance in accordance with claim 1, characterized in that it comprises profiles (116; 118) cooperating in the intermediate component (99) and the casing of the appliance for starting up rotation of the appliance.

6. Appliance as claimed in one or more of the preceding claims, characterized by: devices (77A, 77B) for coupling and uncoupling said two parts (51, 53); resilient devices (75) designed to maintain said coupling devices in the hold position; and, of one piece with one (53) of said two parts, devices for effecting connection (80) between said part and said spool (81; 83), whilst the other one (51) of said parts exhibits outlet bushes (85) for the ends of the lines (F).

7. Appliance in accordance with claim 6, characterized in that said resilient devices (75) urge said parts towards each other (51, 53) in the axial direction, the distancing of said two parts in relation to each other in the axial direction causing the disengagement of said coupling and uncoupling devices (77A, 77B).

8. Appliance in accordance with claim 7, characterized in that one of said parts (53) comprises a tubular wall (65) forming a grooved profile (80) for coupling on the spool or spools (81, 83) of line (F), the spool or spools (81, 83) of line (F ) being set firmly in the said tubular wall (65), said spool or spools having a corresponding grooved profile for engagement in said tubular wall; and that said part (53) is equipped with a series of pin teeth (77A) of a frontal coupling device, designed to engage in corresponding holes (77B) in the other one (51) of said parts forming the casing housing the spool or spools.

9. Appliance in accordance with claim 8, characterized in that said resilient devices (75) comprise a compression spring (75) housed inside said tubular wall (65).

10. Appliance according to claim 8, characterized in that plug-in devices (73) are housed in the tubular wall (65) for mutual engagement of the two parts (51, 53), especially for a bayonet joint.

## Patentansprüche

1. Vorrichtung zum Auslichten von Buschwerk, Gras schneiden oder dgl. mit mehreren Fäden als Schneidelemente, mit einem Aufnahmegehäuse umfassend einen Ober- und einen Unterteil, Mittel zum sicheren Zusammenkuppeln des Ober- und des Unterteils (51, 53), wobei die Teile eine Kammer bilden, in welcher zumindest eine Spule aufgenommen ist, auf welcher die Fäden aufgewickelt sind, und Mittel zum Vergrößern der Länge der Fäden in Abhängigkeit von dem zu schneidenden Vegetationstyp oder um die Fäden nach arbeitsbedingter Abnützung wieder auf ihre vorherige Länge zu bringen, wobei die Vorrichtung so ausgebildet ist, daß sie an eine Antriebsnabe (95) gekoppelt werden kann, die an dem Ende eines Handschafts (91) sitzt, dadurch gekennzeichnet, daß die Vorrichtung ein im wesentlichen schalenförmiges Zwischenbauteil (99) umfaßt zum Einfügen zwischen das Oberteil (51) des Gehäuses (51, 53) und die Antriebsnabe (95) und geeignet zur Verbindung mit der Antriebsnabe (95), und daß eine peripher angeordnete schnell lösbare Kupplungsvorrichtung (100, 112) zwischen dem Zwischenbauteil (99) und dem Gehäuse (51, 53) vorgesehen ist, um sicherzustellen, daß das Gehäuse durch das Zwischenbauteil (99) fest abgestützt ist und mit diesem dreht und schnell von dem Handschaft (91) gelöst werden kann.

2. Vorrichtung nach Anspruch 1, dadurch gekennzeichnet, daß das schalenförmige Zwischenbauteil (99) mit Kupplungsschlitzen (100) und die Vorrichtung mit elastischen Vorsprüngen (112), die in die Schlitze eingreifen, versehen ist, wobei ein schnelles Kuppeln unter Verwendung von Eingriffteilen (112A) bewirkt wird und eine Freigabe durch Druck auf die elastischen Vorsätze (112) erreicht wird.

3. Vorrichtung nach Anspruch 1, dadurch gekennzeichnet, daß das schalenförmige Zwischenbauteil (99) eine Öffnung (99A) zum Aufsetzen auf ein abgestuftes Aufnahmeteil (95A) hat, welches - in üblicher Weise - auf der Antriebsnabe (95) vorgesehen ist, wobei das Zwischenbauteil (99) über dieses Aufnahmeteil (95A) gefügt durch Schraubmittel (97) mit der Habe (95) fest verbunden ist.

4. Vorrichtung nach Anspruch 3, dadurch gekennzeichnet, daß ein Reduzierring (114) vorgesehen ist, um zwischen der Öffnung (99A) in dem schalenförmigen Zwischenbauteil (99) und dem abgestuften Aufnahmeteil (95A) zu wirken, falls letzteres eine verringerte Abmessung hat.

5. Vorrichtung nach Anspruch 1, dadurch gekennzeichnet, daß sie Profile (116; 118) umfaßt, die in dem Zwischenbauteil (99) und dem Gehäuse der Vorrichtung zum Anstarten einer Drehung der Vorrichtung zusammenwirken.

6. Vorrichtung nach einem oder mehreren der vorstehenden Ansprüche, gekennzeichnet durch: Vorrichtungen (77A, 77B) zum Kuppeln und Entkuppeln der zwei Teile (51, 53); elastische Vorrichtungen (75), die so ausgebildet sind, daß sie die Kupplungsvorrichtungen in der Halteposition halten; und, einstückig mit einem (53) der zwei Teile, Vorrichtungen zum Bewirken einer Verbindung (80) zwischen dem betreffenden Teil und der Spule (81; 83), während das andere (51) der Teile Auslaßbuchsen (85) für die Enden der Fäden (F) aufweist.

7. Vorrichtung nach Anspruch 6, dadurch gekennzeichnet, daß die elastischen Vorrichtungen (75) die Teile in axialer Richtung zueinander (51, 53) hin zwingen, wobei der Abstand der zwei Teile in bezug zueinander in axialer Richtung das Lösen der Kupplungs- und Entkupplungsvorrichtung (77A, 77B) veranlaßt.

8. Vorrichtung nach Anspruch 7, dadurch gekennzeichnet, daß einer der Teile (53) eine rohrförmige Wand (65) umfaßt, die ein gerilltes Profil (80) zum Ankuppeln der Spule oder Spulen (81, 83) von Fäden (F) bildet, wobei die Spule oder Spulen (81, 83) von Fäden (F) fest in die rohrförmige Wand (65) eingesetzt sind, wobei die Spule oder Spulen ein entsprechend gerilltes Profil zum Eingriff in die rohrförmige Wand aufweisen; und daß dieser Teil (53) mit einer Reihe von zylindrischen Noppen (77A) einer axialen Kupplungsvorrichtung ausgestattet ist, die so ausgebildet sind, daß sie in entsprechende Löcher (77B) in dem anderen (51) der das Gehäuse der Spule oder Spulen bildenden Teile eingreifen.

9. Vorrichtung nach Anspruch 8, dadurch gekennzeichnet, daß die elastischen Vorrichtungen (75) eine Druckfeder (75) umfassen, die im Inneren der rohrförmigen Wand (65) aufgenommen ist.

10. Vorrichtung nach Anspruch 8, dadurch gekennzeichnet, daß eine Einsteckvorrichtung (73) in der rohrförmigen Wand (65) aufgenommen ist zum gegenseitigen Eingriff der zwei Teile (51, 53), insbesondere für einen Bajonettverschluß.

## Revendications

1. Appareil pour le débroussaillage, la tonte du gazon ou travaux similaires, dont les éléments coupants sont constitués par une pluralité de fils, et comportant un carter ou logement comprenant une partie supérieure et une partie inférieure, des moyens pour accoupler de façon sûre lesdites parties supérieure et inférieure (51, 53) lesquelles forment une chambre dans laquelle est logée au moins une bobine autour de laquelle les fils sont enroulés, et des moyens pour augmenter la longueur desdits fils en fonction du type de végétation devant être coupée, ou pour ramener les fils à leur longueur initiale, en cas d'usure due à l'usage, ledit appareil étant adapté de manière à pouvoir être accouplé à un moyeu rotatif (95) fixé à l'extrémité d'un manche (91), caractérisé en ce que l'appareil comprend un élément constitutif intermédiaire (99), affectant, en substance, la forme d'un bol ou d'une cuvette, qui s'engage entre la partie supérieure (51) du carter (51, 53) et le moyeu rotatif (95), et adapté pour venir en prise avec le moyeu rotatif (95), et des moyens d'accouplement rapide (100, 112) équipant la périphérie de l'élément constitutif intermédiaire (99) précité et du carter (51, 53), pour garantir que ce dernier soit solidement supporté par l'élément constitutif intermédire (99), et tourne avec lui, et pour qu'il puisse être rapidement désolidarisé dudit manche (91).

2. Appareil suivant la revendication 1, caractérisé en ce que l'élément constitutif intermédiaire (99) en forme de bol est pourvu d'encoches de raccordement (100), et en ce que l'appareil est pourvu d'organes de fixation élastiques (112) destinés à s'engager dans lesdites encoches, le raccordement rapide s'effectuant par l'engagement de pièces de fixation (112A) dans lesdites encoches, et le dégagement, par pression sur lesdits organes de fixation élastiques (112).

3. Appareil suivant la revendication 1, caractérisé en ce que l'élément constitutif intermédiaire (99) en forme de bol, présente une ouverture (99A) en vue de son emmanchement sur une tête à épaulement (95A) prévue, de manière usuelle, sur le moyeu rotatif (95), l'élément constitutif intermédiaire (99) étant solidement fixé au moyeu (95) par une vis (97) disposée à l'opposé de cette tête (95A).

4. Appareil suivant la revendication 3, caractérisé en ce qu'une rondelle de réduction (114) est prévue pour remplir la fonction d'organe de remplissage entre l'ouverture (99A) présentée par l'élément constitutif intermédiaire (99) en forme de bol, et la tête à épaulement (95A), si cette dernière présente une dimension réduite.

5. Appareil suivant la revendication 1, caractérisé en ce qu'il comprend des profils (116 ; 118) qui coopèrent avec l'élément constitutif intermédiaire (99) et le carter de l'appareil, pour la mise en rotation de ce dernier.

6. Appareil suivant l'une ou plusieurs des revendications précédentes, caractérisé par : des dispositifs (77A, 77B) pour accoupler et désaccoupler lesdites deux parties (51, 53); des dispositifs élastiques (75) destinés à maintenir lesdits dispositifs d'accouplement dans leur position de retenue ; et, d'un seul tenant avec l'une (53) des deux parties susdites, des dispositifs (80) pour effectuer la connexion entre ladite partie et ladite bobine (81 ; 83) tandis que l'autre (51) desdites parties présente des manchons de sortie (85) pour les extrémités des fils (F).

7. Appareil suivant la revendication 6, caractérisé en ce que lesdits dispositifs élastiques (75) poussent lesdites parties l'une vers l'autre, dans le sens axial, l'écartement desdites parties l'une par rapport à l'autre, dans le sens axial, provoquant la désolidarisation desdits dispositifs d'accouplement et de désaccouplement (77A, 77B).

8. Appareil suivant la revendication 7, caractérisé en ce que l'une (53) desdites deux parties comporte une paroi tubulaire (65) formant un profil rainuré (80) pour accoupler la ou les bobines (81, 83) de fil (F), lesquelles sont calées sur ladite paroi tubulaire (65), la ou les bobines susdites présentant un profil rainuré correspondant, pour venir s'engager autour de ladite paroi tubulaire ; et en ce que ladite partie (53) est pourvue d'une série de tétons (77A) d'un dispositif d'accouplement frontal, destinés à s'engager dans des trous (77B) correspondants, ménagés dans l'autre (51) desdites parties qui forment le carter renfermant la ou les bobines.

9. Appareil suivant la revendication 8, caractérisé en ce que les dispositifs élastiques (75) comprennent un ressort de compression (75), logé dans ladite paroi tubulaire (65).

10. Appareil suivant la revendication 8, caractérisé en ce que les dispositifs embrochables (73) sont logés dans la paroi tubulaire (65), pour l'engagement mutuel des deux parties (51, 53), en particulier pour un joint à baïonnette.
